# EUROPÄISCHE PATENTANMELDUNG

(11) **EP 0 657 338 A1**
(43) Veröffentlichungstag der Anmeldung: **14.06.1995**
(21) Anmeldenummer: 94118932.6
(22) Anmeldetag: 01.12.1994
(51) Int. Cl.: B62B 3/10

(54) **Stapelbarer Einkaufswagen**

(30) Priorität: 07.12.1993 DE 9318735 U; 19.02.1994 DE 9402744 U
(71) Anmelder: Wanzl Metallwarenfabrik GmbH, D-89336 Leipheim (DE)
(72) Erfinder: Eberlein, Herbert, D-89347 Bubesheim (DE)

(57) **Zusammenfassung**

Stapelbarer Einkaufswagen (1), mit einem mit Fahrrollen (3) ausgestatteten Fahrgestell (2), das einen in Schieberichtung sich verjüngenden Korb (18) trägt, wobei an dem der Schiebeeinrichtung zugeordneten Ende des Einkaufswagens (1) eine aus einer Nichtgebrauchslage in eine rückwärtige Gebrauchslage und umgekehrt bewegbare, mit einer aus einem Schwenkteil (21) und aus einem Abstellteil (32) bestehende, zum Abstellen größerer Gegenstände bestimmte Ablage (20) vorgesehen ist, die an ihrem rückwärtigen Ende (33) wenigstens einen Anschlag (36) zum weiteren Abstützen der Gegenstände aufweist, wobei das mit dem Schwenkteil (21) bewegbar verbundene Abstellteil (32) mit Stützmitteln (35) ausgestattet ist, die in wenigstens einer am Fahrgestell (2) angeordneten, in Schieberichtung des Einkaufswagens (1) sich erstreckenden Führung (13) abgestützt sind und eine weitere Abstützung des Abstellteiles (32) über eine dem Schwenkteil (21) angehörende Querstrebe (24) erfolgt, wobei das am Fahrgestell (2) angeordnete Schwenkteil (21) um eine horizontale Achse (22) verschwenkbar ist und begrenzt anheb- und absenkbar gelagert sein kann. Die Querstrebe (24) des Schwenkteiles (21) ist entweder an der Unterseite (39) oder an der Oberseite (40) des Abstellteiles (32) angeordnet.

## Beschreibung

Die Erfindung betrifft einen stapelbaren Einkaufswagen, mit einer Schiebeeinrichtung und mit einem mit Fahrrollen ausgestatteten Fahrgestell, das einen in Schieberichtung sich verjüngenden Korb trägt, dessen rückwärtiges Ende durch eine Klappe verschließbar ist, wobei an dem der Schiebeeinrichtung zugeordneten Ende des Einkaufswagens eine aus einer Nichtgebrauchslage in eine rückwärtige Gebrauchslage und umgekehrt bewegbare, mit einer aus einem Schwenkteil und aus einem Abstellteil bestehende, zum Abstellen größerer Gegenstände bestimmte Ablage vorgesehen ist, die an ihrem rückwärtigen Ende wenigstens einen Anschlag zum weiteren Abstützen der Gegenstände aufweist, wobei das mit dem Schwenkteil bewegbar verbundene Abstellteil mit Stützmitteln ausgestattet ist, die in wenigstens einer am Fahrgestell angeordneten, in Schieberichtung des Einkaufswagens sich erstreckenden Führung abgestützt sind und eine weitere Abstützung des Abstellteiles über eine dem Schwenkteil angehörende Querstrebe erfolgt, wobei das am Fahrgestell angeordnete Schwenkteil um eine horizontale Achse verschwenkbar ist und begrenzt anheb- und absenkbar gelagert sein kann.

Bei Einkaufswagen dieser Art lassen sich z.B. Getränkekisten auf der herausgeklappten Ablage abstellen und transportieren. Bei einem bekannten, von der Firma Clares Equipment Ltd. Großbritannien hergestellten und zum nächstliegenden Stand der Technik zählenden Einkaufswagen ist das Schwenkteil von oben betrachtet als ein im wesentlichen U-förmiges Teil gestaltet, dessen Schenkel als Stützen ausgebildet sind, die sich verschwenkbar am rückwärtigen Ende des Fahrgestelles an diesem abstützen und dessen die Stützen verbindende Querstrebe mit einem größtenteils ebenflächigen Abstellteil um eine horizontale Achse bewegbar verbunden ist, wobei das Abstellteil vorderendig mit Stützmitteln ausgestattet ist, die in Führungen schiebebeweglich abgestützt sind, welche sich in Schieberichtung des Einkaufswagens beidseitig entlang der Träger des Fahrgestelles erstrecken. Die Querstrebe des Schwenkteiles, die an das hintere Ende des Abstellteiles auf gleicher Höhe angrenzt, ist mittig nach unten gekröpft, um einen Handgriff zu bilden. Zu beiden Seiten des Handgriffes sind Anschläge an der Querstrebe angeschweißt, die zum weiteren Abstützen eines auf dem Abstellteil abgestellten Gegenstandes, beispielsweise einer Getränkekiste, bestimmt sind. Die Anschläge sind als separate Teile gestaltet, die in ihrer Form an den griechischen Buchstaben Omega erinnern, wobei sie mit ihren beiden freien Schenkeln an die Querstrebe angeschweißt sind. Sowohl die Anfertigung der Anschläge, als auch deren Befestigung am Schwenkteil sind aufwendig und deshalb teuer. Bei Massenartikeln, wie sie Einkaufswagen darstellen, bedeuten jedoch bereits geringe Mehrkosten einen nicht zu unterschätzenden Kostenfaktor, den es zu vermeiden gilt.
Beim genannten Einkaufswagen erfolgt die Verbindung zwischen dem Abstellteil und der Querstrebe des Schwenkteiles mit Hilfe zweier Flachbänder, die sowohl die Querstrebe als auch zwei am Abstellteil angeordnete, quer zur Schieberichtung des Einkaufswagens sich erstreckende Abschnitte umfassen, an den Abschnitten angeschweißt und mit ihren Enden vernietet sind. Dadurch, daß die Querstrebe etwa auf gleicher horizontaler Ebene wie die Abschnitte angeordnet ist, erstrecken sich die Flachbänder mit ihren beiden geraden Abschnitten ebenfalls in horizontaler Richtung. Dabei ist der oben liegende gerade Abschnitt der Flachbänder höher angeordnet, als die zum Abstellen der größeren Gegenstände bestimmte Ebene des Abstellteiles. Die geraden Abschnitte der Flachbänder ragen in diese Ebene und bilden in nachteiliger Weise Unebenheiten auf dem Abstellteil, die sich dann als hinderlich erweisen, wenn z.B. eine Getränkekiste auf dem Abstellteil abgestellt werden soll.

Die Getränkekiste liegt nicht satt auf dem Abstellteil, sondern teilweise auch auf den Flachbändern auf. Sie wackelt beim Transport und erweckt beim Benützer des Einkaufswagens den Eindruck, sie würde nicht sicher abgestellt sein.

Die Aufgabe der Erfindung besteht darin, einen gattungsgemäßen Einkaufswagen so weiterzuentwickeln, daß sich die geschilderten Nachteile vermeiden lassen.

Die Lösung der Aufgabe besteht darin, daß die Querstrebe des Schwenkteiles entweder an der Unterseite oder an der Oberseite des Abstellteiles angeordnet ist.

Die vorgeschlagene Lösung läßt folgende Vorteile erkennen:
- Am rückwärtigen Ende des Abstellteiles oder am Schwenkteil läßt sich durch einfaches Abkanten wenigstens ein Anschlag anformen. Damit entfällt das bisher separate Anfertigen von Anschlägen ebenso wie das Anschweißen dieser Anschläge.
- Es ist möglich, das Schwenkteil von oben betrachtet als einfaches U-förmiges Teil zu gestalten, das mit einer minimalen Anzahl von Biegungen auskommt. Bei dieser Lösung sind die Träger des Fahrgestelles bevorzugt mehrteilig so gestaltet, daß ein vorderer und ein hinterer Trägerabschnitt vorgesehen sind, wobei das obere Ende des vorderen Trägerabschnittes niedriger angeordnet ist, als das obere Ende des hinteren Trägerabschnittes.
- Selbst wenn das Schwenkteil gemäß eines weiteren nachfolgend beschriebenen Ausführungsbeispieles als mehrfach abgebogenes Teil angefertigt werden sollte, bleibt dennoch ein Kostenvorteil bestehen, wenn das Schwenkteil aus starkem Draht gefertigt ist, der mit Hilfe einer einzigen Biegevorrichtung in einem Biegearbeitsgang herstellbar ist.
- Werden beispielsweise Flachbänder verwendet, um die bewegbare Verbindung zwischen dem Schwenkteil und dem Abstellteil zu bilden, so kann sich ein Vorteil dadurch ergeben, wenn die parallelen Abschnitte der Flachbänder im rechten Winkel zur Abstellfläche des Abstellteiles angeordnet sind, so daß die geraden Abschnitte der Flachbänder nicht mehr in die zum Abstellen der größeren Gegenstände bestimmte Ebene des Abstellteiles ragen. Es werden somit keine Unebenheiten auf dem Abstellteil gebildet. Auf der Ablage abgestellte Gegenstände liegen satt auf dem Abstellteil auf.
- Schließlich ist es möglich, die Flachbänder nach oben zu verlängern, um zwei Anschläge zu erhalten, welche verhindern, daß ein auf die Ablage gestellter Gegenstand nach rückwärts von der Ablage herabfällt.

Nun ist wohl durch die DE 34 44 278.2 ein Einkaufswagen bekannt, bei dessen Ablage das Abstellteil durch eine unterhalb des Abstellteiles angeordnete, dem Schwenkteil angehörende Querstrebe abgestützt ist. Dabei liegt das Abstellteil lose auf der Querstrebe auf. Beim Verschwenken des Schwenkteiles gleitet die Querstrebe an der Unterseite des Abstellteiles entlang. Dieser Einkaufswagen unterscheidet sich vom erfindungsgemäßen Einkaufswagen dadurch, daß dessen Abstellteil nicht mit dem Schwenkteil bewegbar verbunden ist, daß ferner sein Abstellteil um eine horizontale Achse bewegbar am Fahrgestell befestigt und daß sein Schwenkteil nicht anheb- und absenkbar am Fahrgestell gelagert ist. Da das Abstellteil und das Schwenkteil nicht mit Hilfe von Verbindungsmitteln miteinander bewegbar verbunden sind und somit jedes dieser Teile separat am Einkaufswagen befestigt und abgestützt ist, besteht die Gefahr der Beschädigung durch Vandalismus, dem Einkaufswagen im praktischen Einsatz bekanntlich ausgesetzt sind. So ist zu befürchten, daß durch die gewählte Konstruktion sowohl das Abstellteil als auch das Schwenkteil sehr leicht verbogen werden können. Dies ist beim erfindungsgemäßen Einkaufswagen nicht der Fall.

Die Erfindung wird anhand einiger Ausführungsbeispiele naher erläutert. Es zeigt
- Fig. 1 bis Fig. 3: drei Einkaufswagen mit unterschiedlichen Fahrgestellen mit Ablage;
- Fig. 4: den in Fig. 1 dargestellten Einkaufswagen in räumlicher Darstellung;
- Fig. 5 und Fig. 6: zwei unterschiedlich gestaltete Ablagen von oben betrachtet;
- Fig. 7: zwei ineinandergeschobene Einkaufswagen entsprechend Fig. 2;
- Fig. 8: alternative Gestaltungen der Ablage sowie
- Fig. 9 bis Fig. 12: Beispiele von Verbindungen zwischen dem Abstellteil und der Querstrebe.

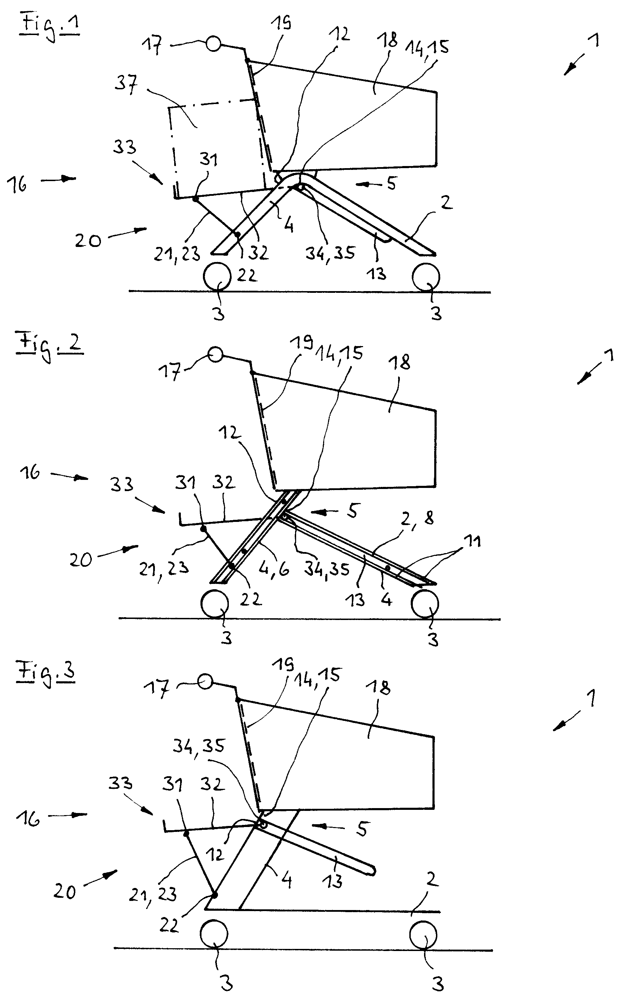

Die in den Fig. 1 bis 3 gezeigten Einkaufswagen 1 weisen folgende gemeinsame Merkmale auf: Ein mit Fahrrollen 3 ausgestattetes konisches Fahrgestell 2, das mit nach oben gerichteten, seitlich angeordneten Trägern 4 ausgestattet ist, die bevorzugt an ihrer höchsten Erhebung 5 einen Korb 18 tragen, der sich in Schieberichtung der Einkaufswagen 1 verjüngt. Das rückwärtige offene Ende des Korbes 18 ist in bekannter Weise durch eine schwenkbare Klappe 19 verschließbar, so daß es möglich ist, gleiche Einkaufswagen 1 platzsparend ineinanderzuschieben, also zu stapeln. Gewöhnlich ist am Korb 18 eine Schiebeeinrichtung 17 in Form eines Handgriffes vorgesehen, wobei dieser auch am Fahrgestell 2 angeordnet sein kann. Am rückwärtigen Ende 16 eines jeden Einkaufswagens 1 ist eine aus einem Schwenkteil 21 und aus einem Abstellteil 32 gestaltete Ablage 20 vorgesehen, wobei das Schwenkteil 21 um eine horizontale Achse 22 am rückwärtigen Ende 16 des Fahrgestelles 2 begrenzt verschwenkbar gelagert ist und wobei die Lagerung der zum Schwenkteil 21 gehörenden Stützen 23 mit großzügigem Spiel so gewählt sein kann, daß sich das Schwenkteil 21 auch eine gewisse Wegstrecke anheben und absenken läßt. Das Abstellteil 32 ist mit seinem hinteren Ende 33 um eine horizontale Achse 31 verschwenkbar am Schwenkteil 21 angelenkt, während am vorderen Ende 34 des Abstellteiles 32 zwei nicht näher dargestellte Stützmittel 35, etwa Rollen, Vorsprünge und dergleichen vorgesehen sind, die in am Fahrgestell 2 vorgesehenen Führungen 13 schiebebeweglich gelagert sind, wobei sich die Führungen 13 in Schieberichtung des Einkaufswagens 1 erstrecken. Die Ablagen 20 sind bei allen drei Ausführungsbeispielen in der Gebrauchslage dargestellt. Beim Ausführungsbeispiel gemäß Fig. 1 ist als größerer Gegenstand eine auf dem Abstellteil 32 abgestellte Getränkekiste 37 eingezeichnet. Unterschiedlich gestaltet sind die Träger 4. Beim Ausführungsbeispiel nach Fig. 1 sind die Träger 4 in bekannter Weise aus nach oben gekrümmten einstückigen Rohren gestaltet, wie dies z.B. in der DE 30 43 599 C2 näher beschrieben ist. Beim Fahrgestell 2 gemäß dem in Fig. 2 gezeigten Ausführungsbeispiel sind die Träger 4 zweistückig gestaltet und aus paarweise angeordneten, parallel verlaufenden Drähten 11 gebildet, die durch Zwischenstücke auf Distanz gehalten sind, so daß dadurch die Führungen 13 für die bereits erwähnten Stützmittel 35 des Abstellteiles 32 gebildet sind. Die Träger 4 bestehen in diesem Beispiel aus einem vorderen und aus einem hinteren Trägerabschnitt 6, 8, wobei aus übereinander angeordneten Drähten 11 gebildete Träger 4 beispielsweise durch die EP 0 113 260 A2 bekannt sind. Beim Ausführungsbeispiel entsprechend Fig. 3 hingegen sind die Führungen 13 so angeordnet, wie sie in der DE 34 44 969.8 A1 gezeigt sind. Diese Ausführungsbeispiele sollen verdeutlichen, daß die erfindungsgemäße Lösung bei den unterschiedlichsten bekannten Einkaufswagen 1 anwendbar ist, wobei bei allen Ausführungsbeispielen das Schwenkteil 21 in Nichtgebrauchslage der Ablage 20 an der hinteren oberen Begrenzung 12 der Träger 4 anliegt, während die Ablage 20 gewöhnlich durch an den Führungen 13 befindlichen Anschlägen 15 gehalten werden, die mit dem Abstellteil 32 zusammenwirken, wobei andere Möglichkeiten der Begrenzung des Schwenkbereiches der Ablage 20 denkbar und auch bekannt sind. Die Ablagen 20, sowie die Fahrgestelle 2 sind so gestaltet und aufeinander abgestimmt, daß in bekannter Weise ein rückwärtiger Einkaufswagen 1 in einen vorausbefindlichen Einkaufswagen 1 einschiebbar ist, wobei eine in Gebrauchslage befindliche Ablage 20 eines vorausbefindlichen Einkaufswagens 1 vom rückwärtigen Einkaufswagen 1 von selbst in die Nichtgebrauchslage gedrückt wird.

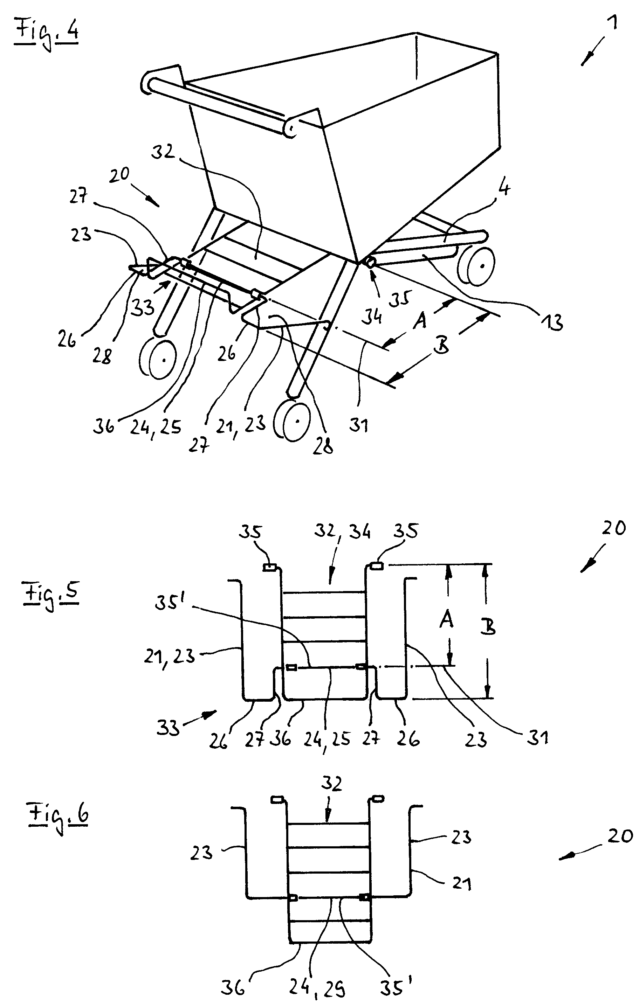

Fig. 4 zeigt den in Fig. 1 dargestellten Einkaufswagen 1 in räumlicher Darstellung. Die Ablage 20 befindet sich in Gebrauchslage. Das Schwenkteil 21 besteht aus zwei Stützen 23, die durch mindestens eine Querstrebe 24 verbunden sind. Die mehrfach gebogene Querstrebe 24 führt unter dem Abstellteil 32 hindurch, bzw. das Abstellteil 32 liegt auf der Querstrebe 24 auf und ist an der Unterseite des Abstellteiles 32 bevorzugt an zwei Stellen um eine horizontale Achse 31 verschwenkbar an der Querstrebe 24 angelenkt. Bedingt durch die nach oben gekrümmten Träger 4 ist es von Vorteil, wenn die Querstrebe 24 aus drei Abschnitten besteht und zwar aus einem mittleren Abschnitt 25, der zum Anlenken an das Abstellteil 32 bestimmt ist und aus zwei äußeren Abschnitten 26, die zu beiden Seiten des Abstellteiles 32 verlaufen und in die Stützen 23 münden. Dabei ist der mittlere Abschnitt 25 der Querstrebe 24 näher (Maß A) am vorderen Ende 34 des Abstellteiles 32 angeordnet, als die äußeren Abschnitte 26 (Maß B). Die Stützen 23 und die äußeren Abschnitte 26, sowie der mittlere Abschnitt 25 bilden zusammen mit zwei Verbindungsabschnitten 27 zwei links und rechts des Abstellteiles 32 befindliche Einschnitte 28. Diese Einschnitte 28 bilden je einen Raum für je einen Abschnitt der Träger 4 eines in einen vorausbefindlichen Einkaufswagen 1 eingeschobenen rückwärtigen Einkaufswagen 1, wobei sich dann die Ablage 20 des vorausbefindlichen Einkaufswagens 1 in der Nichtgebrauchslage befindet. Die eben beschriebene Art der Gestaltung des Schwenkteiles 21 läßt Fahrgestelle 2 zu, deren Träger 4, wie auch in Fig. 1 gezeigt, nach oben gekrümmt sind. Da die Träger 4 eines rückwärtigen Einkaufswagens 1 bedingt durch die Einschnitte 28, nicht an die Querstrebe 24 der Ablage 20 eines vorausbefindlichen Einkaufswagens 1 anstoßen, lassen sich dadurch gleiche Einkaufswagen 1 äußerst platzsparend ineinanderschieben. Das Abstellteil 32 ragt über den mittleren Abschnitt 25 der Querstrebe 24 nach rückwärts hinaus. Das bevorzugt als Gitterrost oder als Kunststoffteil gestaltete Abstellteil 32 ist an seinem hinteren Ende 33 nach oben so abgekantet bzw. winklig nach oben geformt, daß wenigstens ein Anschlag 36 gebildet ist, welcher verhindert, daß ein auf der Ablage 20 befindlicher Gegenstand nach rückwärts von dem bevorzugt nach hinten geneigten Abstellteil 32 herabfällt. Es ist zweckmäßig, am Anschlag 36 zusätzlich eine Griffzone vorzusehen, so daß das Abstellteil 32 bequem von Hand bewegbar ist. Im vorderen Bereich der Träger 4 sind in bekannter Weise Führungen 13 vorgesehen, die nach vorne geneigt und in Schieberichtung des Einkaufswagens 1 angeordnet sind und die in bekannter Weise der schiebebeweglichen Aufnahme von Stützmitteln 35 dienen, welche am vorderen Ende 34 des Abstellteiles 32 und an dessen beiden Seiten angeordnet sind und in die Führungen 13 eingreifen.

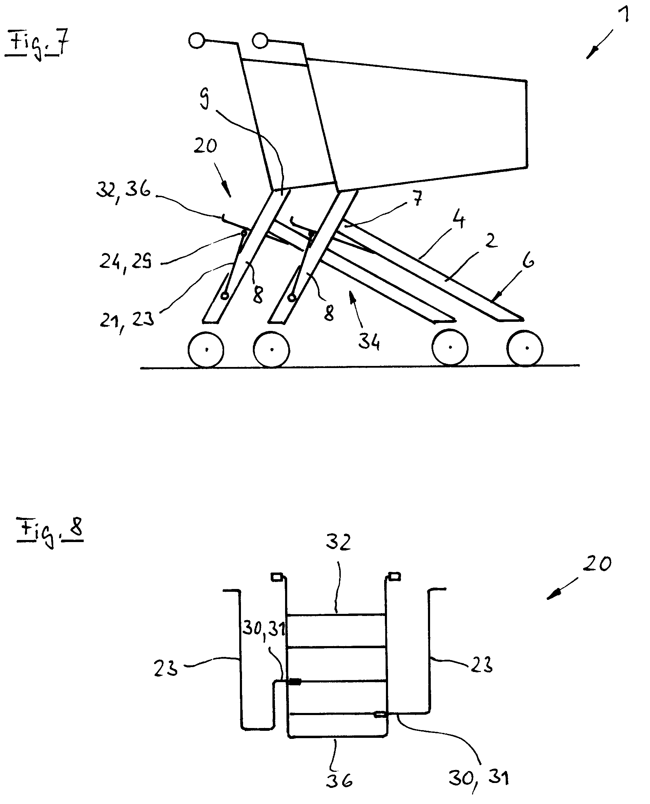

In einer Draufsicht zeigt Fig. 5 eine Ablage 20, wie sie in den Figuren 1 und 4 vorgeschlagen wurde. Man erkennt das zwischen den Stützen 23 des Schwenkteiles 21 anzuordnende Abstellteil 32, sowie die zu beiden Seiten des Abstellteiles 32 befindlichen äußeren Abschnitte 26 der Querstrebe 24, ferner die Verbindungsabschnitte 27 der Querstrebe 24, die von den äußeren Abschnitten 26 zum mittleren Abschnitt 25 führen, der wiederum bevorzugt an der Unterseite des Abstellteiles 32 angeordnet und an einen am Abstellteil 32 vorgesehenen Querstab 35' oder an zwei am Abstellteil 32 angeordneten und geeigneten Aufnahmen um die horizontale Achse 31 verschwenkbar angeordnet ist. Am hinteren Ende 33 des Abstellteiles 32 befindet sich der nach oben gerichtete Anschlag 36, während am vorderen Ende 34 des Abstellteiles 32 die von den Seiten des Abstellteiles 32 wegragenden Stützmittel 35 erkennbar sind.

Ebenfalls in einer Draufsicht zeigt Fig. 6 eine Ablage 20, die bei einem Einkaufswagen 1 gemäß den Figuren 2 und 7 verwendbar ist. Bei diesem Ausführungsbeispiel ist die Querstrebe 24 des Schwenkteiles 21 als geradliniger Abschnitt 29 gestaltet, der auf kürzestem Weg die Stützen 23 verbindet. Alle weiteren Einzelheiten sind wie in Fig. 5 beschrieben vorgesehen und ausgebildet. Auf die erwähnten Einschnitte 28 am Schwenkteil 21, vgl. Fig. 4 und 5, kann hier dann verzichtet werden, wenn beim Fahrgestell 2 das obere Ende 7 des vorderen Trägerabschnittes 6 niedriger angeordnet ist, als das obere Ende 9 des hinteren Trägerabschnittes 8, vgl. Fig. 7. Auch bei diesem Ausführungsbeispiel ist die Querstrebe 24 bevorzugt an einem am Abstellteil 32 befindlichen Querstab 35' angelenkt.

Das vorteilhafte Zusammenwirken der konstruktiven Merkmale von Fahrgestell 2 und Ablage 20 gemäß den Ausführungsbeispielen nach Fig. 2 und 6 wird anhand der Zeichnung gemäß Fig. 7 deutlich. Das Beispiel zeigt zwei ineinandergeschobene Einkaufswagen 1 gemäß Fig. 2, wobei sich die Ablagen 20 der beiden Einkaufswagen 1 in der Nichtgebrauchslage befinden. Die oberen Enden 7 der vorderen Trägerabschnitte 6 der Träger 4 sind, gemessen vom Fußboden, tiefer angeordnet, als die oberen Enden 9 der hinteren Trägerabschnitte 8. Der geradlinige Abschnitt 29 der Querstrebe 24 eines vorausbefindlichen Einkaufswagens 1 führt oberhalb des vorderen Trägerabschnittes 6 eines rückwärtigen Einkaufswagens 1 von einer Stütze 23 zur anderen. Im Gegensatz zu der in Fig. 4 und 5 gezeigten Ablage 20, bei der sich die beiden äußeren Abschnitte 26 des Schwenkteiles 21 in etwa auf Höhe des Anschlages 36 befinden, ist der geradlinige Abschnitt 29 der Querstrebe 24, bzw. des Schwenkteiles 21 in einem Abstand zum Anschlag 36 des Abstellteiles 32 angeordnet. Der geradlinige Abschnitt 29 der Querstrebe 24 ist näher am vorderen Ende 34 des Abstellteiles 32 angeordnet, als der Anschlag 36.

Aus der Darstellung gemäß Fig. 8 sind zwei Ausführungsbeispiele einer Ablage 20 ersichtlich. Beide Beispiele verzichten auf eine Verbindung zwischen den beiden Stützen 23 des Schwenkteiles 21. Jede Stütze 23 weist einen quer zur Schieberichtung des Einkaufswagens 1 gerichteten, horizontal angeordneten Abschnitt 30 auf, die beide auf geeignete Weise um eine gemeinsame horizontale Achse 31 bewegbar mit dem Abstellteil 32 verbunden sind. Allerdings lassen diese Ausführungsbeispiele, die aus den Ausführungsbeispielen gemäß den Figuren 5 und 6 abgeleitet sind, rechte und linke Stützen 23 entstehen. Die beispielsweise zur Bildung der gelenkigen Verbindung zwischen den Stützen 23 und Abstellteil 32 vorgesehenen Klammern lassen sich auch bei den vorab beschriebenen Ausführungsbeispielen verwenden.

Es bleibt anzumerken, daß bei Einkaufswagen 1 gemäß dem Ausführungsbeispiel nach Fig. 3 entweder eine Ablage 20 gemäß Fig. 5, oder eine solche entsprechend Fig. 6 verwendbar ist. Welche der beiden Ablegen 20 auswählbar ist, hängt davon ab, wie hoch das rückwärtige Ende 14 der Führungen 13, vgl. Fig. 3, angeordnet ist. Ferner ist es möglich, das Abstellteil 32 unterhalb des mittleren Abschnittes 25 oder des geradlinigen Abschnittes 29 der Querstrebe 24 anzuordnen und mit den vorab beschriebenen technischen Mitteln mit dem Schwenkteil 21 oder den Stützen 23 gelenkig zu verbinden. Aus Stabilitätsgründen ist jedoch ein Abstützen des Abstellteiles 32 auf dem mittleren Abschnitt 25 oder auf dem geradlinigen Abschnitt 29 der Querstrebe 24 zu empfehlen. Schließlich ist es möglich, anstelle von zwei, bevorzugt an den Trägern 4 angeordneten Führungen 13 lediglich eine Führung vorzusehen, die als U-förmiges Teil gestaltet, mit ihren nach oben gerichteten Schenkeln bevorzugt an einer Querstrebe des Fahrgestelles 2 oder an der Unterseite des Korbes 18 befestigt ist und die lichte Weite der Schenkel so gewählt ist, daß das Abstellteil 32 zwischen den Schenkeln angeordnet und auf dem die Schenkel verbindenden Abschnitt aufliegend, verschiebbar gelagert ist. Dabei können die Stützmittel 35 entweder am Abstellteil 32 oder am U-förmigen Teil vorgesehen sein.

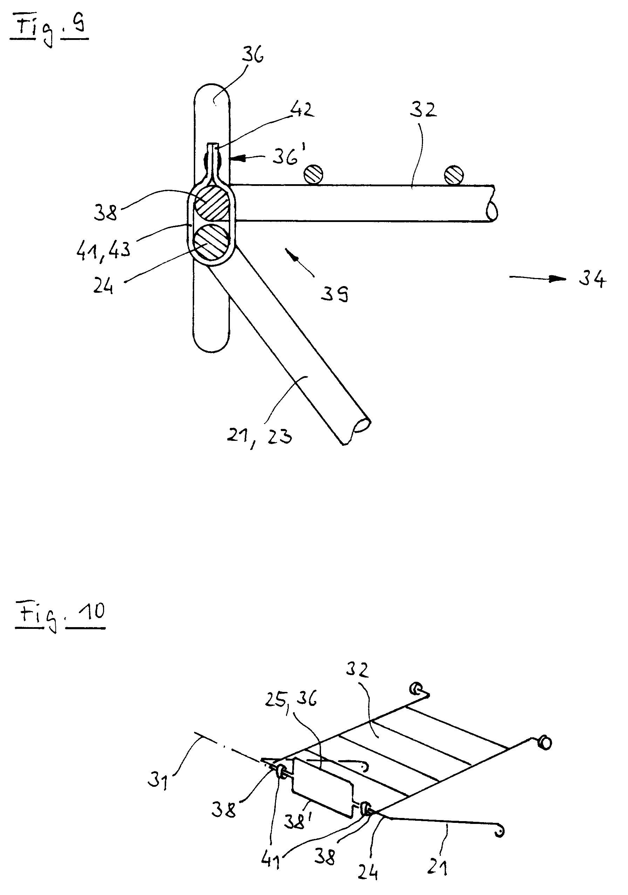

Fig. 9 zeigt in einem Abschnitt die gelenkige Verbindung von Schwenkteil 21 und Abstellteil 32. Man erkennt einen Teil einer der beiden Stützen 23 des Schwenkteiles 21 sowie die Querstrebe 24 im Schnitt. Die Querstrebe 24 verläuft unterhalb eines Abschnittes 38 des Abstellteiles 32, das sich in Schieberichtung des Einkaufswagens 1 erstreckt. Die somit an der Unterseite 39 des Abstellteiles 32 angeordnete Querstrebe 24 liegt am Abschnitt 38, bzw. an beiden Abschnitten 38 an. Die beiden Gelenke 41, welche die bewegbare Verbindung von Schwenkteil 21 und Abstellteil 32 erlauben, sind durch je ein Flachband gebildet. Jedes Flachband umschlingt einen Abschnitt 38 und einen Teil der Querstrebe 24. Die freien Enden 42 der beiden Flachbänder sind im Beispiel nach oben gerichtet und miteinander vernietet. Sowohl das Schwenkteil 21, als auch das Abstellteil 32 sind, wie bei allen anderen Ausführungsbeispielen, in üblicher Weise aus Drähten gefertigt. Dies erlaubt in äußerst zweckmäßiger Weise die Bildung von aus Flachbändern bestehenden Gelenken 41. Man erkennt in der Zeichnung ferner den durch den mittleren Abschnitt 25 gebildeten Handgriff, vgl. Fig. 4, den Anschlag 36 sowie zwei Querstäbe des Abstellteiles 32, welche die Längsseiten des Abstellteiles 32 verbinden.

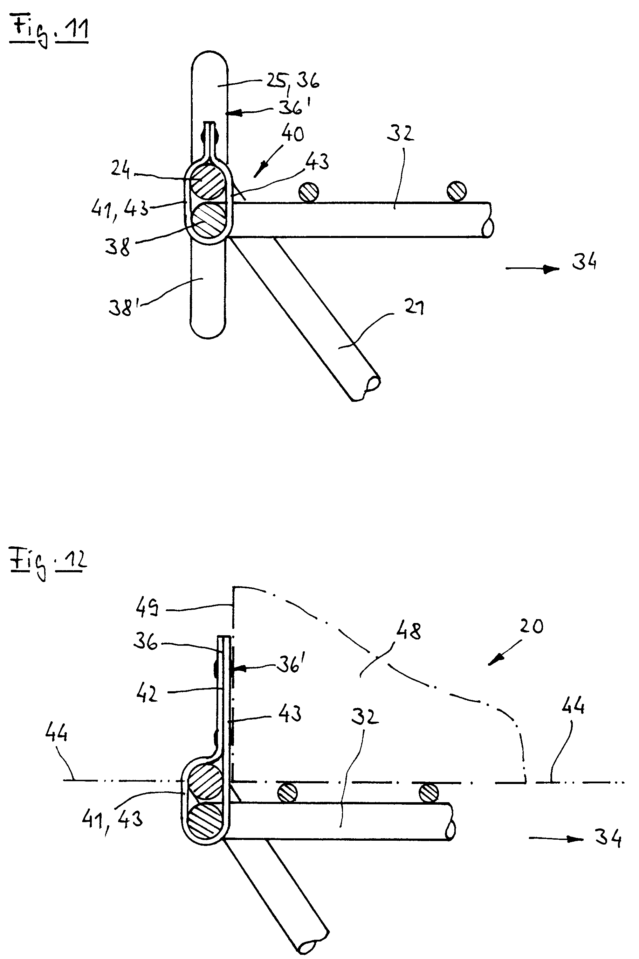

Bei dem in den Figuren 10 und 11 gezeigten Ausführungsbeispielen verläuft die Querstrebe 24 oberhalb der beiden Abschnitte 38 des Abstellteiles 32. Die Querstrebe 24 liegt auf den beiden Abschnitten 38 auf und ist ebenfalls mit Hilfe von zwei Gelenken 41 mit dem Abstellteil 32 verbunden. Die Gelenke 41 sind wieder durch die erwähnten Flachbänder gebildet, so daß das Schwenkteil 21 und das Abstellteil 32 um eine horizontale Achse 31 bewegbar miteinander verbunden sind. Bei diesem Ausführungsbeispiel wird der Anschlag 36 durch Nachobenkröpfen des mittleren Abschnittes 25 der Querstrebe 24 und der mögliche Handgriff durch einen nach unten gekröpften mittigen Abschnitt 38' des Abstellteiles 32 gebildet, der die beiden Abschnitte 38 verbindet. Bei diesem Ausführungsbeispiel liegt die Querstrebe 24 an der Oberseite 40 des Abstellteiles 32 auf.

Eine zweckmäßige Ausgestaltung der Neuerung zeigt Fig. 12. Führt man die beiden vernieteten Enden 42 der Flachbänder der Gelenke 41 ein Stück weit nach oben, so erhält man je einen Anschlag 36. Beide Anschläge 36 verhindern, daß auf der Ablage 20 abgestellte Gegenstände nach rückwärts von der Ablage 20 herabfallen.

Bei allen in Fig. 9 bis 12 gezeigten Ausführungsbeispielen sind die geraden Abschnitte 43 der Gelenke 41 senkrecht angeordnet. Sie ragen nicht in die Ebene 44 des Abstellteiles 32, die zum Abstellen der Gegenstände 48 vorgesehen ist. In Fig. 12 ist teilweise und gestrichelt ein Gegenstand 48 eingezeichnet, der nach unten auf der Ebene 44 abgestützt ist. Einer der beiden vertikalen Wände 49 des Gegenstandes 48 liegt an den geraden Abschnitten 43 der Gelenke 41 an. Der Gegenstand 48 liegt somit satt auf dem Abstellteil 32 auf. Gleiches läßt sich auch auf die Ausführungsbeispiele gemäß Fig. 1 bis 7 übertragen. Es erweist sich bei allen gezeigten Ausführungsbeispielen als zweckmäßig, die Anschlagflächen 36' der Anschläge 36 bevorzugt näher zum vorderen Ende 34 des Abstellteiles 32 anzuordnen, als die entgegengesetzt angeordneten hinteren Begrenzungen der Querstrebe 24 und/oder des Abstellteiles 32. Dadurch wird eine satte Anlage jener vertikalen Wand 49 eines auf der Ablage 20 befindlichen Gegenstandes 48 erreicht, die an den Anschlägen 36 anliegt. Anstelle von zwei am Abstellteil 32 befindlichen Abschnitten 38 kann auch nur ein Abschnitt 38 vorgesehen sein, der die Breite des Abstellteiles 32 durchmißt. Die Verbindung dieses Abschnittes 38 mit der Querstrebe 24 erfolgt, wie vorab beschrieben, ebenfalls über wenigstens ein, gewöhnlich über zwei Gelenke 41. Schließlich ist es möglich, entweder an der Querstrebe 24, oder am Abstellteil 32 anstelle eines Anschlages 36 zwei solcher Anschläge 36 vorzusehen oder anzuformen.

## Patentansprüche

1. Stapelbarer Einkaufswagen, mit einer Schiebeeinrichtung und mit einem mit Fahrrollen ausgestatteten Fahrgestell, das einen in Schieberichtung sich verjüngenden Korb trägt, dessen rückwärtiges Ende durch eine Klappe verschließbar ist, wobei an dem der Schiebeeinrichtung zugeordneten Ende des Einkaufswagens eine aus einer Nichtgebrauchslage in eine rückwärtige Gebrauchslage und umgekehrt bewegbare, mit einer aus einem Schwenkteil und aus einem Abstellteil bestehende, zum Abstellen größerer Gegenstände bestimmte Ablage vorgesehen ist, die an ihrem rückwärtigen Ende wenigstens einen Anschlag zum weiteren Abstützen der Gegenstände aufweist, wobei das mit dem Schwenkteil bewegbar verbundene Abstellteil mit Stützmitteln ausgestattet ist, die in wenigstens einer am Fahrgestell angeordneten, in Schieberichtung des Einkaufswagens sich erstreckenden Führung abgestützt sind und eine weitere Abstützung des Abstellteiles über eine dem Schwenkteil angehörende Querstrebe erfolgt, wobei das am Fahrgestell angeordnete Schwenkteil um eine horizontale Achse verschwenkbar ist und begrenzt anheb- und absenkbar gelagert sein kann, dadurch **gekennzeichnet,** daß die Querstrebe (24) des Schwenkteiles (21) entweder an der Unterseite (39) oder an der Oberseite (40) des Abstellteiles (32) angeordnet ist.

2. Stapelbarer Einkaufswagen nach Anspruch 1, dadurch **gekennzeichnet,** daß die Querstrebe (24) am wenigstens einen Abschnitt (38) des Abstellteiles (32) anliegt.

3. Stapelbarer Einkaufswagen nach Anspruch 1 oder 2, dadurch **gekennzeichnet,** daß die Querstrebe (24) mit einem am Abstellteil (32) befindlichen Querstab (35') verbunden ist.

4. Einkaufswagen nach einem der Ansprüche 1 bis 3, dadurch **gekennzeichnet,** daß an der Querstrebe (24) oder am Abstellteil (32) wenigstens ein Anschlag (36) vorgesehen ist.

5. Einkaufswagen nach einem der Ansprüche 1 bis 4, dadurch **gekennzeichnet,** daß die Querstrebe (24) näher am vorderen Ende (34) des Abstellteiles (32) angeordnet ist als der wenigstens eine Anschlag (36).

6. Stapelbarer Einkaufswagen nach einem der Ansprüche 1 bis 5, dadurch **gekennzeichnet,** daß die Querstrebe (24) einen mittleren Abschnitt (25) und zwei äußere Abschnitte (26) aufweist, wobei der mittlere Abschnitt (25) mit dem Abstellteil (32) verbunden ist und die äußeren Abschnitte (26) zu beiden Seiten des Abstellteiles (32) so angeordnet sind, daß diese vom vorderen Ende (34) des Abstellteiles (32) weiter entfernt sind, als der mittlere Abschnitt (25).

7. Stapelbarer Einkaufswagen nach einem der Ansprüche 1 bis 6, dadurch **gekennzeichnet,** daß die Querstrebe (24) durch einen geradlinigen Abschnitt (29) gebildet ist, der die Stützen (23) auf kürzestem Weg verbindet.

8. Stapelbarer Einkaufswagen nach einem der Ansprüche 1 bis 7, dadurch **gekennzeichnet,** daß die äußeren Abschnitte (26) und der mittlere Abschnitt (25) der Querstrebe (24) durch Verbindungsabschnitte (27) verbunden sind und daß durch diese Teile (25, 26, 27) und durch die Stützen (23) an der Querstrebe (24) zwei Einschnitte (28) gebildet sind, in welchen sich je ein Abschnitt der Träger (4) eines rückwärtigen Einkaufswagens (1) dann befindet, wenn dieser rückwärtige Einkaufswagen (1) in einen vorausbefindlichen Einkaufswagen (1) eingeschoben ist.

9. Stapelbarer Einkaufswagen nach einem der Ansprüche 1 bis 8, dadurch **gekennzeichnet,** daß anstelle eines Schwenkteiles (21) zwei Stützen (23) vorgesehen sind, die auf einer gemeinsamen horizontalen Achse (31) schwenkbar am Abstellteil (32) angelenkt sind.

10. Einkaufswagen nach einem der Ansprüche 1 bis 9, dadurch **gekennzeichnet,** daß die Anschläge (36) durch die das Schwenkteil (21) und das Abstellteil (32) verbindenden Gelenke (41) gebildet sind.

11. Einkaufswagen nach einem der Ansprüche 1 bis 10, dadurch **gekennzeichnet,** daß die Gelenke (41) gerade Abschnitte (43) aufweisen, die nach oben gerichtet sind.

12. Einkaufswagen nach einem der Ansprüche 1 bis 11, dadurch **gekennzeichnet,** daß die Anschlagflächen (36') der Anschläge (36) näher am vorderen Ende (34) des Abstellteiles (32) angeordnet sind, als die entgegengesetzt angeordneten hinteren Begrenzungen der Querstrebe (24) und/oder des Abstellteiles (32).

13. Einkaufswagen nach einem der Ansprüche 1 bis 6, dadurch **gekennzeichnet,** daß das obere Ende (7) des vorderen Trägerabschnittes (6) eines zweigeteilten Trägers (4) des Fahrgestelles (2), gemessen vom Fußboden, tiefer angeordnet ist, als das obere Ende (9) des hinteren Trägerabschnittes (8).
